# EUROPÄISCHE PATENTSCHRIFT

(11) **EP 3 215 397 B1**
(45) Veröffentlichungstag und Bekanntmachung des Hinweises auf die Patenterteilung: **17.04.2019**
(21) Anmeldenummer: 15784574.4
(22) Anmeldetag: 22.10.2015
(51) Int. Cl.: B60Q 1/38, H05B 33/08, H05B 37/02

(54) **BELEUCHTUNGSVORRICHTUNG FÜR EINE AUSSENLICHTFUNKTION EINES KRAFTFAHRZEUGS SOWIE VERFAHREN ZUM BETREIBEN EINER ENTSPRECHENDEN BELEUCHTUNGSVORRICHTUNG**
LIGHTING DEVICE FOR AN EXTERNAL LIGHT FUNCTION OF A MOTOR VEHICLE AND METHOD FOR OPERATING SUCH A LIGHTING DEVICE
DISPOSITIF D'ÉCLAIRAGE ASSURANT UNE FONCTION D'ÉCLAIRAGE EXTÉRIEUR D'UN VÉHICULE AUTOMOBILE, AINSI QUE PROCÉDÉ PERMETTANT DE FAIRE FONCTIONNER UN DISPOSITIF D'ÉCLAIRAGE CORRESPONDANT

(30) Priorität: 05.11.2014 DE 102014016335
(43) Veröffentlichungstag der Anmeldung: 13.09.2017
(73) Patentinhaber: Audi AG, 85045 Ingolstadt (DE)
(72) Erfinder: HAMM, Michael, 72800 Eningen (DE); KAUP, Mona, 74906 Bad Rappenau (DE)
(74) Vertreter: Thielmann, Frank
(86) Internationale Anmeldenummer: PCT/EP2015/002103
(87) Internationale Veröffentlichungsnummer: WO 2016/070963

(56) Entgegenhaltungen:
- EP-A2- 2 596 992
- WO-A1-2014/090563
- DE-A1-102004 036 174
- DE-A1-102006 039 182
- DE-A1-102011 119 230
- DE-U1-202012 004 747
- US-A1- 2003 156 422
- US-A1- 2007 183 152

## Beschreibung

Die vorliegende Erfindung betrifft ein Verfahren zum Betreiben einer Beleuchtungsvorrichtung für eine Au-ßenlichtfunktion eines Kraftfahrzeugs mit einer Vielzahl von Segmenten, die jeweils mindestens eine LED aufweisen, sowie einer Steuervorrichtung zum Ansteuern der Vielzahl von LEDs mittels eines Ansteuersignals, wobei das Ansteuersignal als PWM-Signal ausgebildet ist.

Aus dem Stand der Technik sind derartige Beleuchtungsvorrichtungen für eine Außenlichtfunktion von Kraftfahrzeugen bekannt, die beispielsweise ausgelegt sind, weitere Verkehrsteilnehmer optisch und möglichst gut erkennbar über das weitere Fahrverhalten eines Fahrzeugs zu informieren. In diesem Zusammenhang sind Blinklichter, Rücklichter, Rückfahrscheinwerfer, Bremslichter und dergleichen zu nennen. Derartige, aus einer Vielzahl von Segmenten zusammengesetzte Beleuchtungsvorrichtungen, die jeweils mindestens eine LED aufweisen, werden dabei so betrieben, dass innerhalb eines Zeitintervalls von 200 ms unterschiedliche LEDs sequentiell aktiviert werden. Dies ist möglich durch die schnelle Ansprechzeit von LEDs. Auf diese Weise lässt sich beispielsweise der so genannte "wischende Blinker" realisieren, bei dem LEDs sequentiell von der Fahrzeuginnen- zur Fahrzeugau-ßenseite eingeschaltet werden, wodurch sich eine zusätzliche Richtungsinformation aussenden lässt. Aus der WO 2014/090563 ist beispielsweise eine Beleuchtungseinrichtung bekannt, in der eine Verschiebung des photometrischen Schwerpunkts der Lichtverteilung und damit ein Lichteffekt beim Anschalten der Beleuchtungseinrichtung erzeugt wird. Beispielsweise kann die Beleuchtungseinrichtung als Fahrtrichtungsanzeiger ausgestaltet sein, so dass durch einen Wischeffekt, der über die Verschiebung des photometrischen Schwerpunkts erzeugt wird, die angezeigte Fahrtrichtung visuell verstärkt wird.

Dabei können je nach Bauteilkonstruktion und eingesetzter Technologie, insbesondere in Abhängigkeit von gegebenenfalls verwendeten Reflektoren und Lichtleitern, nur wenige einzeln steuerbare Licht-Segmente zur Verfügung stehen. Bei sequentieller Aktivierung kann dadurch ein störender Stroboskopeffekt auftreten, der zu Verwechslungen führen kann. Dies kann beispiels- , weise die Schlusslicht- und die Bremslichtkammer einer Beleuchtungsvorrichtung betreffen.

Weiterhin ist insbesondere auf dem nordamerikanischen Markt die Flächenforderung EPLLA (Effective Projected Luminous Lens Area Requirements) zu berücksichtigen, wonach zwei unterschiedliche Forderungen zu erfüllen sind: zunächst eine so genannte Flächenforderung, nach der eine vorgegebene Fläche sofort abstrahlen muss, weiterhin eine so genannte Helligkeitsanforderung, wonach die vorgegebene Fläche jedenfalls nach Ablauf von 200 ms mit einer vorgebbaren Helligkeit abstrahlen muss. Infolgedessen ist mit aus dem Stand der Technik bekannten Möglichkeiten nur eine sehr reduzierte Animation möglich, nämlich durch jenen Flächenanteil, der die minimal geforderte Fläche gemäß der Flächenanforderung übersteigt.

Aus der DE 10 2006 007 712 A1 ist eine Leuchte eines Kraftfahrzeugs mit wenigstens zwei Signallichtern, die jeweils wenigstens ein Leuchtmittel aufweisen, bekannt, bei der die Signalfunktion wenigstens eines Signallichts in Abhängigkeit von fahrzeug- und/oder sensorspezifischen Daten einschaltbar oder veränderbar ist. Die Signallichter können dabei in Segmente aufgeteilt werden, wobei diese unabhängig voneinander ansteuerbar sind. Ziel ist es, diese derart anzusteuern, insbesondere unter Verwendung eines PWM-Signals, dass für alle erfassten Verkehrsteilnehmer in verschiedenen Richtungen und Abständen die Helligkeit der Leuchte unabhängig vom Standort des erfassten Verkehrsteilnehmers immer gleich stark erscheint.

Aus der DE 10 2004 036 174 A1 ist ein Verfahren zur Steuerung einer Strahlungsverteilung und einer Strahlungsquelle, insbesondere im Einsatz in Kraftfahrzeugen, bekannt. Dabei wird eine mit mehreren Einzelleuchtelementen ausgestattete Strahlungsquelle zwischen verschiedenen Ziel-Strahlungsverteilungen in der Weise umgeschaltet, dass ein oder mehrere Einzelleuchtelemente gezielt angesteuert werden, wobei die von der Strahlungsquelle erzeugte Strahlungsverteilung während des Umschaltvorgangs definierte Zwischenzustände annimmt. Durch diese Maßnahme wird erreicht, dass die Winkelschritte in kleinere Schritte zerlegt werden, wobei mit zunehmender Anzahl der Zwischenzustände ein zunehmend kontinuierlicher Verlauf des Umschaltvorgangs erreicht wird. Das sequentielle definierte Umschalten hat damit zur Folge, dass der Übergang zwischen verschiedenen Strahlungsverteilungen weniger abrupt erfolgt und somit der Umschaltvorgang selbst für den Benutzer angenehmer gestaltet ist. Dabei kann sich die Intensität der emittierten Strahlung mit der Zeit ändern und dabei einem bestimmten vorgegebenen Verlauf folgen. Die Intensität der von den Einzelleuchtelementen emittierten Strahlung kann während des Umschaltvorgangs diskrete Werte annehmen. Im Falle einer Regelung der emittierten Intensität über den Strom hat die Stromstärke dann während des Umschaltvorgangs einen stufenförmigen Verlauf, wobei die Anzahl der Stufen der Anzahl der diskreten Werte entspricht. Ebenso wird eine Variante beschrieben, bei der die Intensität der von den Einzelleuchtelementen emittierten Strahlung während des Umschaltvorgangs einem kontinuierlichen Verlauf folgt. Zur Regelnung der Intensität der von den Einzelleuchtelementen emittierten Strahlung wird eine Pulsweitenmodulation vorgeschlagen.

Eine der Aufgaben der vorliegenden Erfindung besteht darin, eine gattungsgemäße Beleuchtungsvorrichtung derart weiterzubilden, dass einerseits die Sicherheit im Straßenverkehr erhöht werden kann, dass andererseits die Gefahr eines störenden Stroboskopeffekts oder von Verwechslungen verschiedener Außenlichtfunktionen eines Kraftfahrzeugs zuverlässig vermieden werden kann.

Die vorliegende Erfindung betrifft ein Verfahren zum Betreiben einer Beleuchtungsvorrichtung für eine Außenlichtfunktion eines Kraftfahrzeugs gemäß Anspruch 1.

Der vorliegenden Erfindung liegt die Erkenntnis zugrunde, dass durch das Ansteuern zumindest einer LED mit einem Ansteuersignal, das zumindest abschnittsweise zumindest eine Rampenfunktion umfasst, eine praktisch fließende Lichtausbreitung in der Beleuchtungsvorrichtung, beispielsweise zur Realisierung einer richtungsweisenden Signalfunktion, ermöglicht wird. Deren Bedeutung ist für Teilnehmer im Straßenverkehr leicht interpretierbar, sodass dadurch die Verkehrssicherheit erhöht wird. Überdies kann dadurch ein störender Stroboskopeffekt ausgeschlossen werden. Durch das Ansteuern mit einer Rampenfunktion werden überdies Verwechslungen zwischen unterschiedlichen Außenlichtfunktionen : eines Kraftfahrzeugs zuverlässig verhindert.
Bevorzugt weist die zumindest eine Rampenfunktion einen Anfangswert sowie einen zumindest lokalen Endwert des PWM-Signals auf, wobei der Anfangswert mit einer ersten Lichtstärke und der zumindest lokale Endwert mit einer zweiten Lichtstärke korreliert ist, wobei das PWM-Signal mindestens einen Zwischenwert aufweist, der mit einer Lichtstärke korreliert ist, die zwischen der ersten und der zweiten Lichtstärke liegt. Dadurch ist klargestellt, dass eine Rampenfunktion jedenfalls mindestens drei unterschiedliche Werte der Lichtstärke aufweist. Die erste Lichtstärke kann dabei größer sein als die zweite Lichtstärke. Alternativ kann die zweite Lichtstärke größer sein als die erste Lichtstärke. Mit anderen Worten kann die Rampenfunktion eine Zunahme der Lichtstärke oder eine Abnahme der Lichtstärke realisieren. Weiterhin ist klargestellt, dass ein normales Einschalten einer LED ohne Stützstellen keine Rampenfunktion im Sinne der vorliegenden Erfindung darstellt.

Die mindestens eine Rampenfunktion kann derart ausgebildet sein, dass sie linear verläuft und/oder quadratisch und/oder exponentiell und/oder stufenförmig und/oder gemäß einer beliebigen Kennlinie, die insbesondere parametrierbar ausgebildet ist und bevorzugt eine vorgebbare Anzahl an Stützstellen umfasst, zwischen denen die Kennlinie, insbesondere linear, interpoliert ist. Auf diese Weise kann unterschiedlichen Anforderungen Rechnung getragen werden: Beispielsweise ist die Wahrnehmbarkeit bei Niederschlag wie Regen oder Schnee eine andere als bei trockenem Wetter. Ebenfalls kann auf diese Weise die unterschiedlichen Wahrnehmbarkeit zwischen Tag und Nacht berücksichtigt werden. Die mindestens eine Rampenfunktion ist demnach in beliebiger Weise frei programmierbar und stellt daher eine beliebige Anzahl an Realisierungsmöglichkeiten bereit.

In einer bevorzugten Ausführungsform ist in der Steuervorrichtung für zumindest eine erste LED eines ersten Segments ein Ansteuersignal mit zumindest einer ersten Rampenfunktion und für zumindest eine LED eines zweiten Segments ein Ansteuersignal mit zumindest einer zweiten Rampenfunktion hinterlegt. Auf diese Weise können unterschiedliche Segmente mit unterschiedlichen Rampenfunktionen betrieben werden, um dadurch bestimmte optische Effekte, beispielsweise ein Durchlaufen eines Lichtspots, oder dergleichen zu realisieren.

In diesem Zusammenhang ist es insbesondere bevorzugt, dass die zumindest eine erste und die zumindest eine zweite Rampenfunktion derart ausgebildet sind, dass sie zumindest abschnittsweise gleichzeitig, nacheinander oder überlappend verlaufen. "Gleichzeitig" bedeutet am Beispiel des Aufdimmens, dass unterschiedliche Segmente synchron aufgedimmt werden. "Nacheinander" bedeutet, dass unterschiedliche Segmente nacheinander aufgedimmt werden. "Überlappend" bedeutet, dass, während ein Segment aufgedimmt wird, ein anderes Segment auf- oder abgedimmt wird - und umgekehrt. Entsprechendes gilt für das Abdimmen unterschiedlicher Segmente.

Die Steuervorrichtung ist ausgebildet, an eine Vielzahl von LEDs, die zumindest eine vorgebbare Leuchtfläche bilden, ein Ansteuersignal derart bereitzustellen, dass diese Leuchtfläche unverzüglich nach dem Einschalten der Beleuchtungsvorrichtung, d.h. ohne Verwendung einer Rampenfunktion, zumindest für eine vorgebbare Zeitdauer mit einer dritten vorgebbaren Lichtstärke abstrahlt. Auf diese Weise kann beispielsweise eine Vordimmung der LEDs realisiert werden, wobei Flächenanteile sowohl zur EPLLA-Erfüllung herangezogen und trotzdem zeitlich dynamisch adaptiert, beispielsweise linear hochgedimmt, werden können. In diesem Zusammenhang ist die dritte vorgebbare Lichtstärke niedriger als die Lichtstärke im Normalbetrieb. Dies erlaubt das bereits erwähnte Vordimmen. Zusätzlich kann die vorgebbare Zeitdauer größer gleich 100 ms sein, insbesondere genau 200 ms und bevorzugt maximal 5 s. Dies trägt dem Umstand Rechnung, dass bei der EPLLA-Flächenforderung die vorgegebene Flächenanforderung sofort erfüllt werden muss, die ausgewiesene Helligkeitsanforderung erst nach 200 ms. In Ländern außerhalb des Geltungsbereichs der EPLLA können andere Zeitdauern von Relevanz sein.

In diesem Zusammenhang kann die Steuervorrichtung weiterhin ausgebildet sein, an eine Vielzahl von LEDs, die zumindest die vorgebbare Leuchtfläche bilden, ein Ansteuersignal derart bereitzustellen, dass die Leuchtfläche nach Ablauf der vorgebbaren Zeitdauer mit einer vierten vorgebbaren Lichtstärke abstrahlt, die größer ist als die dritte vorgebbare Lichtstärke. Dabei ist die vierte vorgebbare Lichtstärke insbesondere die Lichtstärke im Normalbetrieb der Beleuchtungsvorrichtung.

Die Steuervorrichtung kann weiterhin ausgebildet sein, an mindestens eine LED der Vielzahl von LEDs, die nicht zu der vorgebbaren Leuchtfläche beiträgt, insbesondere bereits vor Ablauf der vorgebbaren Zeitdauer ein Ansteuersignal bereitzustellen, das zumindest abschnittsweise eine Rampenfunktion umfasst. Dies ermöglicht eine Animation des Flächenanteils, der beispielsweise die EPLLA-Forderung übersteigt.

Die Steuervorrichtung weist eine Schnittstelle auf, an der ein Signal bereitstellbar ist, das mit dem Betriebszustand mindestens einer Fahrzeugfunktion korreliert ist, wobei die Steuervorrichtung ausgelegt ist, das zumindest eine an mindestens eine der Vielzahl von LEDs bereitstellbare Ansteuersignal in Abhängigkeit des an der Schnittstelle bereitgestellten Signals zu variieren. In diesem Zusammenhang wird verwiesen auf die parallele Patentanmeldung mit gleichem Anmeldetag, internes Aktenzeichen P12436DE.0 mit dem Titel "Beleuchtungsvorrichtung für eine Außenlichtfunktion eines Kraftfahrzeugs und Verfahren zur Ansteuerung einer derartigen Beleuchtungsvorrichtung", wonach die Beleuchtungsvorrichtung neben ihrer Erstfunktion je nach Fahrzeugzustand, d.h. insbesondere abgestellt oder in Betrieb, dazu genutzt werden kann, beispielsweise den Ladezustand einer Batterie, die Reichweite, Fahrbereitschaft, Temperaturanzeige, Start-Stopp-Phase, Stimmung, Beschreibung der Parksituation (eng, weit, Vorhandensein neuer Objekte seit dem Abstellen), die Intensität eines Bremsvorgangs, die Außentemperatur und dergleichen anzuzeigen.

Weitere vorteilhafte Ausführungsformen ergeben sich aus den Unteransprüchen.

Im Nachfolgenden werden nunmehr Beispiele zum Verständnis der vorliegenden Erfindung unter Bezugnahme auf die beigefügten Zeichnungen näher beschrieben. Diese zeigen in:
- Fig. 1: in schematischer Darstellung die zeitliche Abhängigkeit der in zwei unterschiedlichen Segmenten mit mindestens einer LED einer Beleuchtungsvorrichtung umgesetzten Leistung gemäß einem ersten Beispiel;
- Fig. 2: in schematischer Darstellung die zeitliche Abhängigkeit der in zwei unterschiedlichen Segmenten mit mindestens einer LED einer Beleuchtungsvorrichtung umgesetzten Leistung gemäß einem zweiten Beispiel;
- Fig. 3: in schematischer Darstellung ein Beispiel einer Beleuchtungsvorrichtung mit einer Vielzahl von Segmenten; und
- Fig. 4: ein Beispiel für einen Einschaltvorgang bei der in Fig. 3 dargestellten Beleuchtungsvorrichtung mit einer Vielzahl von Segmenten.

In den nachfolgenden Ausführungen werden für gleiche und gleich wirkende Elemente die gleichen Bezugszeichen verwendet. Weiterhin werden in den nachfolgenden Ausführungen beispielhaft alle LEDs eines Segments identisch angesteuert. Wie für den Fachmann offensichtlich, können hierbei im Rahmen der vorliegenden Erfindung ohne Weiteres Modifikationen vorgenommen werden.

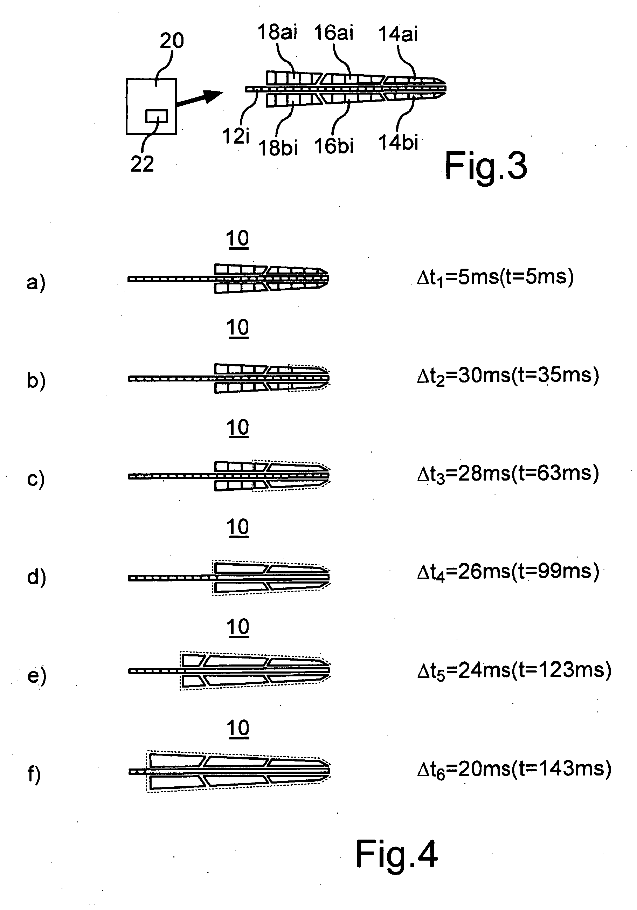

Unter Bezugnahme auf Fig. 3 umfasst eine Beleuchtungsvorrichtung 10 eine Vielzahl von Segmenten 12i, 14ai, 14bi, 16ai, 16bi sowie 18ai, 18bi, mit i= 1 bis n, die jeweils mindestens eine LED aufweisen. In dem in Fig. 3 dargestellten Beispiel beträgt bezüglich der Segmente 12i n=25, bezüglich der Segmente 14ai, 14bi beträgt n=5, bezüglich der Segmente 16ai, 16bi beträgt n ebenfalls 5 und bezüglich der Segmente 18ai, 18bi gilt auch jeweils n=5. Ein Segment ist im Beispiel die kleinste Einheit, deren LEDs (oder deren einzige LED) identisch bzw. in Korrelation zueinander (insbesondere bei unterschiedlich farbigen LEDs) angesteuert werden.

Eine Steuervorrichtung 20 ist mit jeder der LEDs der Segmente 12i bis 18bi gekoppelt, um diese mittels eines Ansteuersignals anzusteuern, wobei das Ansteuersignal als PWM(Pulsweitenmodulation)-Signal ausgebildet ist. Die Steuervorrichtung 20 umfasst eine Speichervorrichtung 22, in der für zumindest eine LED dieser Segmente 12i bis 18bi ein Ansteuersignal hinterlegt ist, das zumindest abschnittsweise zumindest eine Rampenfunktion umfasst.

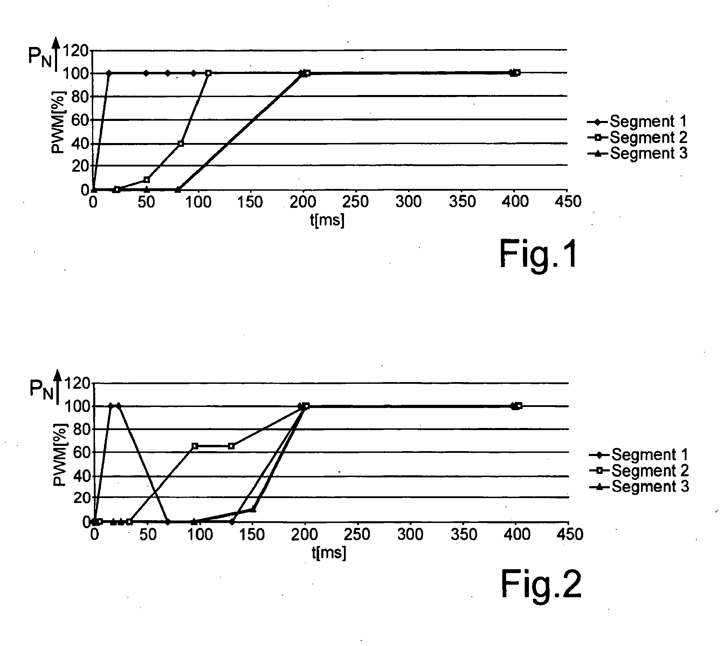

Fig. 1 zeigt in schematischer Ansicht den zeitlichen Verlauf der Ansteuersignale, mit denen die LEDs des jeweiligen Segments angesteuert werden. Der besseren Übersichtlichkeit wegen wird eine Beleuchtungsvorrichtung 10 mit 3 Segmenten angenommen. Wie durch die Kennzeichnung auf der Abszisse zu erkennen ist, werden die Ansteuersignale durch PWM-Signale mit unterschiedlichem Tastverhältnis repräsentiert. Ein Tastverhältnis von 0% entspricht demnach einer ausgeschalteten LED, ein Tastverhältnis von 100% einer LED bei einem Betrieb mit Nennleistung P_{N}, d.h. der Leistung im Normalbetrieb. Tastverhältnisse zwischen diesen beiden Extrema resultieren in Leistungen, die zwischen 0% und 100% der Nennleistung P_{N} liegen.

Wie Fig. 1 entnommen werden kann, wird die Leistung bei Segment 1 unverzüglich, d.h. ohne weitere Stützstelle, von 0% auf 100% hochgefahren. Dies entspricht einem normalen Einschaltvorgang nach dem Stand der Technik. Ein noch schnelleres Hochfahren ist aufgrund der endlichen Einschaltzeiten von LEDs nicht möglich. Die LEDs von Segment 1 werden demnach ab etwa 12 ms mit ihrer Nennleistung P_{N} betrieben. Die LEDs des Segments 2 werden zum Zeitpunkt 20 ms eingeschaltet und ihre Leistung wird linear bis t=50 ms auf 10% der Nennleistung P_{N} erhöht. Von dort wird die Leistung linear bis t=80 ms auf 40% der Nennleistung P_{N} erhöht und im Folgenden bis zum Zeitpunkt t=100 ms auf 100% der Nennleistung P_{N}. Auf diesem Wert verbleibt dann das Ansteuersignal für Segment 2. Segment 3 wird erst zum Zeitpunkt t=80 ms eingeschaltet und dann linear bis zum Zeitpunkt t=200 ms auf 100% der Nennleistung P_{N} hochgefahren. Ab t=200 ms verbleibt das Ansteuersignal für Segment 3 bei einer Nennleistung P_{N} von 100%. Dieses Beispiel wäre geeignet, die EPLLA-Forderungen zu erfüllen, wenn das Segment 1 die Flächenforderung erfüllt und die Summe der drei Segmente die Helligkeitsforderung. Mittels der dargestellten rampenförmigen Einschaltfunktionen der Segmente 2 und 3 ergibt sich eine Aufdimmung und damit ein dynamischer Lichteffekt, der zur Erhöhung der Sicherheit beitragen kann. Die EPLLA-Forderungen sind relevant bei eingeschalteter Zündung, nicht jedoch bei Zündung aus. Dies eröffnet die Möglichkeit, bei Zündung aus die vorliegende Erfindung in einem größeren Bereich als 200 ms zu nutzen.

Fig. 2 zeigt ein zweites Beispiel eines Einschaltvorgangs einer Beleuchtungsvorrichtung 10 mit drei Segmenten, Segment 1, Segment 2 und Segment 3. Hier wird wiederum Segment 1 unverzüglich vom ausgeschalteten Zustand auf Nennleistung P_{N}=100% gebracht, kurz darauf mittels einer negativen Rampenfunktion bis t=70 ms wieder ausgeschaltet, verbleibt dann in ausgeschaltetem Zustand bis t=140 ms und wird dann bis t=200 ms wieder auf Nennleistung P_{N} aufgedimmt. Anschließend verbleibt die Ansteuerung auf diesem Wert. Betreffend Segment 2 wird dieses bei t=30 ms mittels einer Rampenfunktion bis t=90 ms auf 65% der Nennleistung P_{N} eingeschaltet, verbleibt bis t=140 ms auf diesem Wert und wird anschließend bis t=200 ms auf Nennleistung aufgedimmt. Anschließend verbleibt die Ansteuerung betreffend Segment 2 auf diesem Wert. Hinsichtlich Segment 3 wird dieses zum Zeitpunkt t=90 ms eingeschaltet und bis t=150 ms auf 10% der Nennleistung P_{N} aufgedimmt. Anschließend folgt bis zum Zeitpunkt t=200 ms ein Aufdimmen auf Nennleistung P_{N}, wobei im weiteren Verlauf die Ansteuerung auf diesem Wert verbleibt.

Durch die Überschneidung der Dimmrampen in den in den Fig. 1 und 2 dargestellten Beispielen lässt sich beispielsweise ein Stroboskopeffekt zuverlässig minimieren.

Zusammenfassend ist festzustellen, dass die LEDs der jeweiligen Segmente durch die Steuervorrichtung 20 pulsweitenmoduliert angesteuert werden und mit frei programmierbaren Rampen betrieben werden können. Durch diese Maßnahmen lassen sich insbesondere die einzelnen Segmente gleichzeitig, nacheinander oder überlappend auf- bzw. abdimmen. Insbesondere ist eine lineare Aufdimmung möglich, eine quadratische, eine exponentielle oder eine stufenförmige. Eine Aktivierung kann mittels parametrierbarer Kennlinien erfolgen, die aus einer bestimmten Anzahl an Stützstellen bestehen, bevorzugt zwischen drei und zehn, zwischen denen wiederum bevorzugt linear interpoliert wird. Wird nach dem Aufdimmen wieder abgedimmt, kann ein pulsierendes Licht erzeugt werden. Auch hierbei können die einzelnen Segmente gleichzeitig, nacheinander oder überlappend hinsichtlich ihrer Rampenfunktionen betrieben werden.

Die zeitliche Helligkeitsänderung kann kontinuierlich sein oder auch in definierten Sprüngen erfolgen. Das Zeitintervall, in Welchem die sequentielle Adaption erfolgt, liegt in der Regel im Bereich von 0 ms bis 200 ms, kann aber für Referenzläufe und Begrüßungsszenarien des Fahrers, beispielsweise in einem Betriebszustand, bei dem die Zündung des Fahrzeugs aus ist, im Sinne von Coming Home/Leaving Home deutlich größer als 200 ms sein und bis zu 5 s betragen. Die Einschaltszenarien müssen hierbei keine Reihenfolge hinsichtlich der Segmente aufweisen; so können die Segmente in beliebiger Reihenfolge aktiviert werden, d.h. vollkommen durcheinander, jedes zweite Segment, alle nacheinander, alle gleichzeitig oder auch teilweise überlappend. Mittels einer Vordimmung der LEDs, wie dies beispielsweise bei dem in Fig. 1 dargestellten Beispiel hinsichtlich Segment 1 der Fall ist, können Flächenanteile sowohl zur EPLLA-Erfüllung herangezogen und trotzdem zeitlich dynamisch adaptiert, insbesondere linear hochgedimmt, werden.

Für die Flächenerfüllung gibt es folgende Möglichkeiten:
- ein dynamisches Hochdimmen einer ausreichend großen Fläche;
- durch statisches Zuschalten einer anderen Lichtfunktion;
- durch Animation des Flächenanteils, der die EPLLA-Forderung übersteigt;
- durch Vordimmen der zeitlich dynamisch betriebenen Fläche.

Die vorliegende Erfindung umfasst auch eine Mehrfarbigkeit der leuchtenden Flächen, insbesondere der Segmente, beispielsweise mittels RGB-LEDs oder einer Überlagerung des Lichts unterschiedlicher LEDs. In einem Ausführungsbeispiel gibt die Beleuchtungsvorrichtung bis 75 ms nur blaues Licht ab, wobei in den folgenden 25 ms die gelben und roten Lichtanteile aufgedimmt werden, sodass nach 100 ms weißes Licht zur Verfügung steht. Dabei muss das Licht nicht nur von LEDs bereitgestellt werden, vielmehr kann das Licht der LEDs auch von Licht eines Lichtleiters überlagert werden. Das vom Lichtleiter bereitgestellte Licht kann dabei durch LED-Speisung oder Laser-Speisung erzeugt werden. Hierbei kann beispielsweise bei Funktionen wie Coming Home/Leaving Home eine andere Farbe gewählt werden als im Fahrbetrieb des Fahrzeugs.

Durch die vorliegende Erfindung lässt sich insbesondere eine praktisch flie-ßende Lichtausbreitung im Medium realisieren, die zum Beispiel als richtungsweisende Signalfunktion wirken kann und deren Bedeutung für Verkehrsteilnehmer besonders leicht interpretierbar ist. In diesem Zusammenhang wird auf das in Fig. 4 dargestellte Beispiel verwiesen. Fig. 4 a) bis f) zeigen den Einschaltvorgang der in Fig. 3 dargestellten Beleuchtungsvorrichtung 10 zum Zeitpunkt 5 ms (Fig. 4a), nach weiteren 30 ms (Fig. 4b), nach weiteren 28 ms (Fig. 4c), nach weiteren 26 ms (Fig. 4d), nach weiteren 24 ms (Fig. 4e) und nach weiteren 20 ms (Fig. 4f). Die LEDs der jeweiligen Segmente 12 bis 18bi werden gemäß einer in dem Speicher 22 der Steuervorrichtung 20 hinterlegten Rampenfunktion aufgedimmt, was in der Darstellung von Fig. 4 a) bis f) dadurch darzustellen versucht wurde, dass die Grenzen zwischen den einzelnen LEDs eines Segments verschwimmen, d.h das Segment als Einheit erscheint. Zur weiteren Verdeutlichung wurden die bereits mit Nennleistung betriebenen LEDs gestrichelt umrahmt.

Im Einzelnen: Zum Zeitpunkt t=5 ms werden die LEDs der Segmente 12i, 14ai, 14bi, 16ai und 16bi jeweils für sich genommen durch entsprechende Ansteuerung mit einem PWM-Signal mit einer Leistung P betrieben, die zu einer Vordimmung führt, die insbesondere die Flächenforderung der EPLLA erfüllt. Wird beispielsweise durch die in Fig. 3 dargestellte Beleuchtungsvorrichtung ein Blinklicht an einem Kraftfahrzeug realisiert, so muss gemäß EPLLA in den USA das Blinklicht vorne am Kraftfahrzeug eine Mindestfläche von 22 cm², hinten eine Mindestfläche von 50 cm² haben, die sofort zu erfüllen sind (und nicht erst nach 200 ms wie die Helligkeitsanforderung).

Zum Zeitpunkt t=35 ms (siehe Fig. 4b) wird ausgehend von den Segmenten 12n, 14an, 14bn, d.h. in der Darstellung von Fig. 4b von rechts her, begonnen, die LEDs der genannten Segmente gemäß einer Rampenfunktion von ihrem vorgedimmten Zustand ausgehend aufzudimmen. Zum Zeitpunkt t=63 ms (siehe Fig. 4c) sind die LEDs der Segmente 14a, 14b sowie die rechten Segmente 12i bereits auf Nennleistung P_{N} aufgedimmt, wobei begonnen wird, die LEDs der Segmente 16an und 16bn, 16a(n-1) und 16b(n-1), usw. und die entspechend angeordneten Segmente 12i ebenfalls auf Nennleistung P_{N} aufzudimmen. In der Darstellung von Fig. 4d sind bis auf die LEDs der Segmente 16a1 und 16b1 alle LEDs der Segmente 16i auf Nennleistung P_{N} aufgedimmt. Entsprechendes gilt für die entsprechend angeordneten Segmente 12i. In der Darstellung von Fig. 4e wird begonnen, die LEDs der Segmente 18ai, 18bi von rechts beginnend von ihrem ausgeschalteten Zustand mittels einer Rampenfunktion seriell auf Nennleistung P_{N} hochzudimmen (gleichzeitig werden die LEDs der entsprechend angeordneten Segmente 12i von ihrem vorgedimmten Zustand ebenfalls auf Nennleistung P_{N} hochgedimmt) bis in der Darstellung von Fig. 4f alle LEDs der Segmente 18ai und 18bi, insbesondere auch alle LEDs der Segmente 12i, auf Nennleistung P_{N} hochgedimmt sind. Durch die dargestellte Vordimmung ist gezeigt, dass auch flächenmäßig kleine Lichtfunktionen dynamisiert werden können.

## Patentansprüche

1. Verfahren zum Betreiben einer Beleuchtungsvorrichtung (10) für eine Außenlichtfunktion eines Kraftfahrzeugs mit einer Vielzahl von Segmenten (12i, 14ai, 14bi, 16ai, 16bi, 18ai, 18bi), die jeweils mindestens eine LED aufweisen; sowie einer Steuervorrichtung (20) zum Ansteuern der Vielzahl von LEDs jeweils mittels eines PWM-Signals; mit folgenden Verfahrenschritten:
Ansteuern zumindest einer LED mit einem Ansteuersignal, welches den zeitlichen Verlauf eines mit der Leistung der zumindest einen LED korrelierten Tastverhältnisses des betreffenden PWM-Signals repräsentiert und das zumindest abschnittsweise zumindest eine Rampenfunktion umfasst, und
Bereitstellen eines weiteren Ansteuersignals an eine Vielzahl von LEDs, die zumindest eine vorgebbare Leuchtfläche bilden, derart
dass diese Leuchtfläche unverzüglich nach dem Einschalten der Beleuchtungsvorrichtung, das heißt ohne Verwendung einer Rampenfunktion, zumindest für eine vorgebbare Zeitdauer mit einer vorgebbaren Start-Lichtstärke abstrahlt, welche niedriger ist als die Lichtstärke im Normalbetrieb,
**gekennzeichnet dadurch, dass**
- diese Leuchtfläche nach Ablauf der vorgebbaren Zeitdauer mit einer vorgebbaren Folge-Lichtstärke abstrahlt, die größer ist als die vorgebbare Start-Lichtstärke,
- die Steuervorrichtung (20) eine Schnittstelle aufweist, an der ein Signal bereitgestellt wird, das mit dem Betriebszustand mindestens einer Fahrzeugfunktion korreliert ist, wobei die Steuervorrichtung (20) das zumindest eine an mindestens eine der Vielzahl von LEDs bereitstellbare Ansteuersignal in Abhängigkeit des an der Schnittstelle bereitgestellten Signals variiert, und
- die Beleuchtungsvorrichtung neben der Außenlichtfunktion dazu genutzt wird, im abgestellten Zustand des Kraftfahrzeugs den Ladezustand einer Batterie anzuzeigen.

2. Verfahren nach Anspruch 1,
**dadurch gekennzeichnet, dass**
die zumindest eine Rampenfunktion einen Anfangswert sowie einen zumindest lokalen Endwert des Tastverhältnisses des PWM-Signals aufweist, wobei der Anfangswert mit einer ersten Lichtstärke und der zumindest lokale Endwert mit einer zweiten Lichtstärke korreliert ist, wobei das Tastverhältnis des PWM-Signals mindestens einen Zwischenwert aufweist, der mit einer Lichtstärke korreliert ist, die zwischen der ersten und der zweiten Lichtstärke liegt.

3. Verfahren nach Anspruch 2,
**dadurch gekennzeichnet, dass**
die erste Lichtstärke größer ist als die zweite Lichtstärke, oder
dass die zweite Lichtstärke größer ist als die erste Lichtstärke.

4. Verfahren nach einem der vorhergehenden Ansprüche,
**dadurch gekennzeichnet, dass**
die mindestens eine Rampenfunktion derart ausgebildet ist, dass
sie gemäß einer beliebigen Kennlinie verläuft, die parametrierbar ausgebildet ist und eine vorgebbare Anzahl an Stützstellen umfasst, bevorzugt zwischen drei und zehn, zwischen denen die Kennlinie, insbesondere linear, interpoliert ist.

5. Verfahren nach einem der Ansprüche 2 bis 4,
**gekennzeichnet durch** Hinterlegen eines Ansteuersignals mit zumindest einer ersten Rampenfunktion in der Steuervorrichtung (20) für zumindest eine erste LED eines ersten Segments und eines Ansteuersignals mit zumindest einer zweiten Rampenfunktion für zumindest eine LED eines zweiten Segments.

6. Verfahren nach Anspruch 5,
**dadurch gekennzeichnet, dass**
die zumindest eine erste und die zumindest eine zweite Rampenfunktion derart ausgebildet sind, dass sie zumindest abschnittsweise
- gleichzeitig;
- nacheinander; oder
- überlappend
verlaufen.

7. Verfahren nach einem der vorhergehenden Ansprüche,
**dadurch gekennzeichnet, dass**
die vorgebbare Zeitdauer größer gleich 100 ms ist, insbesondere genau 200 ms und bevorzugt maximal 5 s.

8. Verfahren nach einem der vorhergehenden Ansprüche,
**gekennzeichnet durch**:
durch die Steuervorrichtung (20) Bereitstellen eines Ansteuersignals, das zumindest abschnittsweise eine Rampenfunktion umfasst, an mindestens eine LED der Vielzahl von LEDs, die nicht zu der vorgebbaren Leuchtfläche beiträgt, insbesondere bereits vor Ablauf der vorgebbaren Zeitdauer.

## Claims

1. Method for operating a lighting device (10) for an external light function of a motor vehicle with a plurality of segments (12i, 14ai, 14bi, 16ai, 16bi, 18ai, 18bi), which each have at least one LED; and a controlling device (20) for actuating the plurality of LEDs each by means of a PWM signal; with following method steps:
actuating at least one LED with an actuating signal, which represents the temporal course of a duty cycle of the respective PWM signal, said duty cycle correlating with the output of the at least one LED, and which comprises at least sectionally at least one ramp function, and
providing a further actuating signal to a plurality of LEDs, which form at least one pre-determinable lighting surface, such
that this lighting surface immediately after the switching on of the lighting device, i.e. without using a ramp function, radiates at least for a pre-determinable time duration with a pre-determinable initial light intensity which is lower than the light intensity in normal operation,
**characterised in that**
- this light surface after the expiry of the pre-determinable time duration radiates with a pre-determinable successive light intensity, which is greater than the pre-determinable initial light intensity,
- the control device (20) has an interface at which a signal is provided which is correlated with the operational state of at least one vehicle function, wherein the control device (20) varies the at least one actuating signal which can be provided at at least one of the plurality of LEDs depending on the signal provided at the interface, and
- the lighting device in addition to the external light function is used to show the charge status of a battery in a switched off state of the motor vehicle.

2. Method according to claim 1,
**characterised in that**
the at least one ramp function has an initial value and one at least local end value of the duty cycle of the PWM signal, wherein the initial value is correlated with a first light intensity and the least local end value is correlated with a second light intensity, wherein the duty cycle of the PWM signal has at least one interim value, which is correlated with a light intensity which lies between the first and the second light intensity.

3. Method according to claim 2,
**characterised in that**
the first light intensity is greater than the second light intensity, or that the second light intensity is greater than the first light intensity.

4. Method according to one of the preceding claims,
**characterised in that**
the at least one ramp function is designed such that it runs according to any characteristic curve which is parameterisably designed and comprises a pre-determinable number of support points, preferably between three and ten, between which the characteristic curve, in particular linear, is interpolated.

5. Method according to one of claims 2 to 4,
**characterised by**
deposition of an actuating signal with at least one second ramp function in the control device (20) for at least one first LED of a first segment and an actuating signal with at least one first ramp function and for at least one LED of a second segment.

6. Method according to claim 5,
**characterised in that**
the at least one first and the at least one second ramp function are formed such that they at least sectionally run
- simultaneously;
- after one another; or
- overlapping.

7. Method according to one of the preceding claims,
**characterised in that**
the pre-determinable time duration is greater than or equal to 100 ms, in particular exactly 200 ms and preferably maximum 5 s.

8. Method according to one of the preceding claims,
**characterised by**:
the provision by the control device (20) of an actuating signal, which comprises at least sectionally a ramp function, to at least one LED of the plurality of LEDs, which does not contribute to the pre-determinable light surface, in particular already prior to the expiration of the pre-determinable time duration.

## Revendications

1. Procédé de fonctionnement d'un dispositif d'éclairage (10) pour une fonction de lumière extérieure d'un véhicule automobile avec une pluralité de segments (12i, 14ai, 14bi, 16ai, 16bi, 18ai, 18bi), qui comportent chacun au moins une LED, ainsi qu'avec un dispositif de commande (20) destiné à commander la pluralité de LED à chaque fois au moyen d'un signal à modulation de largeur d'impulsions PWM ; avec les étapes de procédé suivantes :
commande d'au moins une LED avec un signal de commande qui représente l'allure temporelle d'un taux d'impulsions, corrélé à la puissance de l'au moins une LED, du signal PWM concerné et qui comprend au moins en partie au moins une fonction rampe, et
fourniture d'un autre signal de commande à une pluralité de LED qui forment au moins une surface d'éclairage pouvant être prescrite, de telle sorte que, immédiatement après la mise sous tension du dispositif d'éclairage, c'est-à-dire sans utilisation d'une fonction rampe, cette surface d'éclairage éclaire au moins pour une durée pouvant être prescrite avec une intensité lumineuse initiale pouvant être prescrite qui est inférieure à l'intensité lumineuse en fonctionnement normal,
**caractérisé en ce que**
- cette surface d'éclairage éclaire, après l'expiration de la durée pouvant être prescrite, avec une intensité lumineuse suivante pouvant être prescrite qui est supérieure à l'intensité lumineuse initiale pouvant être prescrite,
- le dispositif de commande (20) comporte une interface à laquelle est fourni un signal qui est corrélé avec l'état de fonctionnement d'au moins une fonction de véhicule, lequel dispositif de commande (20) modifie l'au moins un signal de commande pouvant être fourni à au moins une de la pluralité des LED en fonction du signal fourni à l'interface, et
- outre la fonction de lumière extérieure, le dispositif d'éclairage est utilisé pour afficher l'état de charge d'une batterie lorsque le véhicule automobile est arrêté.

2. Procédé selon la revendication 1, **caractérisé en ce que** l'au moins une fonction rampe comporte une valeur initiale et une valeur finale au moins locale du taux d'impulsions du signal PWM, la valeur initiale étant corrélée avec une première intensité lumineuse et la valeur finale au moins locale étant corrélée avec une deuxième intensité lumineuse, le taux d'impulsions du signal PWM comportant au moins une valeur intermédiaire qui est corrélée avec une intensité lumineuse qui se situe entre la première et la deuxième intensité lumineuse.

3. Procédé selon la revendication 2, **caractérisé en ce que** la première intensité lumineuse est supérieure à la deuxième intensité lumineuse ou **en ce que** la deuxième intensité lumineuse est supérieure à la première intensité lumineuse.

4. Procédé selon l'une quelconque des revendications précédentes, **caractérisé en ce que** l'au moins une fonction rampe est conçue de telle sorte qu'elle s'étend selon une courbe caractéristique quelconque qui est conçue paramétrable et qui comprend un nombre pouvant être prescrit de points d'appui, de préférence entre trois et dix, entre lesquels la courbe caractéristique est interpolée, en particulier de façon linéaire.

5. Procédé selon l'une quelconque des revendications 2 à 4, **caractérisé par** l'enregistrement d'un signal de commande avec au moins une deuxième fonction rampe dans le dispositif de commande (20) pour au moins une première LED d'un premier segment et un signal de commande avec au moins une première fonction rampe et pour au moins une LED d'un deuxième segment.

6. Procédé selon la revendication 5, **caractérisé en ce que** l'au moins une première fonction rampe et l'au moins une deuxième fonction rampe sont conçues de telle sorte qu'elles s'étendent au moins en partie
- en même temps ;
- l'une après l'autre ; ou
- en se chevauchant.

7. Procédé selon l'une quelconque des revendications précédentes, **caractérisé en ce que** la durée pouvant être prescrite est supérieure ou égale à 100 ms, en particulier est égale à 200 ms exactement et de préférence est égale au maximum à 5 s.

8. Procédé selon l'une quelconque des revendications précédentes, **caractérisé par** :
fourniture, par le dispositif de commande (20), d'un signal de commande qui comprend au moins en partie une fonction rampe à au moins une LED de la pluralité de LED qui ne contribue pas à la surface d'éclairage pouvant être prescrite, en particulier avant même l'expiration de la durée pouvant être prescrite.
